# EUROPÄISCHE PATENTANMELDUNG

(11) **EP 1 312 585 A2**
(43) Veröffentlichungstag der Anmeldung: **21.05.2003**
(21) Anmeldenummer: 02023319.3
(22) Anmeldetag: 18.10.2002
(51) Int. Cl.: C03B 35/24, C03B 35/16, C03B 18/02, C03B 13/18

(54) **Vorrichtung zur Unterstützung eines Glasbandes**

(30) Priorität: 20.11.2001 DE 10156961
(71) Anmelder: Schott Glas, 55122 Mainz (DE); CARL-ZEISS-STIFTUNG trading as SCHOTT GLAS, 55122 Mainz (DE)
(72) Erfinder: Lautenschläger, Gerhard, 07743 Jena (DE); Kunert, Christian, 55122 Mainz (DE); Morstein, Andreas, 07743 Jena (DE)
(74) Vertreter: Fleck, Hermann-Josef, Dr.-Ing.

(57) **Zusammenfassung**

Die Erfindung betrifft eine Vorrichtung zur Unterstützung eines Glasbandes mit wenigstens einer, im Bereich der Unterseite des Glasbandes angeordneten Walze. Um ein Glasband während des Produktionsablaufes möglichst frei von mechanischen Beschädigungen zu halten, ist es erfindungsgemäß vorgesehen, dass der Walze wenigstens eine Unterstützungsvorrichtung zugeordnet ist, dass mittels einer Stellvorrichtung wahlweise die Walze oder die Unterstützungsvorrichtung in Kontakt mit der Glasbandunterseite bringbar ist, wobei die Unterstützungsvorrichtung zumindest bereichsweise über ein Gaspolster im Kontakt mit der Glasbandunterseite steht. Die Walzen werden dann zu Produktionsbeginn oder nach einem Glasbandriss eingesetzt, um eine Vorschubkraft auf das Glasband übertragen zu können.

## Beschreibung

Die Erfindung betrifft eine Vorrichtung zur Unterstützung eines Glasbandes mit wenigstens einer, im Bereich der Unterseite des Glasbandes angeordneten Walze.

Ein weit verbreitetes Verfahren zur Herstellung von Flachglas ist das Float-Verfahren. Dabei wird geschmolzenes Glas auf ein Bad aus flüssigem Zinn aufgegossen, breitet sich darauf aus und erstarrt, während es auf dem Zinnbad in Bereich mit niedrigeren Temperaturen gezogen wird. Dabei bilden sich auf der Ober- und Unterseite feuerpolierte Oberflächen aus, die keine weitere Nachverarbeitung mehr erfordern.

Am kalten Ende des Zinnbades wird das Glasband von der Badoberfläche abgehoben und über eine Reihe von Walzen in einen Kühlofen transportiert, in dem das Glas kontrolliert auf Raumtemperatur abgekühlt und dabei entspannt wird.

Das Abheben des Glasbandes vom Zinnbad geschieht üblicher Weise ebenfalls durch Walzen. Diese Walzen haben im laufenden Betrieb die Aufgabe, das Glasband sanft vom Zinnbad abzuheben, die Vorschubkraft für das Band wird dann durch die Rollen des Kühlofens aufgebracht. Zu Beginn der Produktion oder bei einer Störung, die zu einem Abriss des Glasbandes führt, müssen jedoch die ersten Walzen nach dem Floatbad diese Vorschubkraft aufbringen.

Insbesondere die erste Walze nach dem Zinnbad ist relativ hohen Temperaturen ausgesetzt, zudem ist an dieser Walze die Verunreinigung durch aus dem Zinnbad mitgeschleppten Partikeln am stärksten. Aufgrund der hohen Temperaturen haften die Verunreinigungen teilweise auf der Oberfläche der Walzen, wodurch es zu einer Beschädigung der Unterseite des frisch geformten Glasbandes kommt.

Ein Ersatz der ersten Walzen nach der Formgebung durch ein Luftkissentisch wird zum Beispiel in US 3,615,315 und US 4,081,260 beschrieben. Hierdurch kann die Schädigung der Oberfläche vermieden werden, da das Glasband kontaktfrei über eine Fläche hinweggeführt wird. Ein gravierender Nachteil dieses Verfahrens besteht allerdings darin, dass durch den Luftkissentisch keine Ziehkraft mehr ausgeübt werden kann.

Solange ein intaktes Glasband vorliegt, kann die fehlende Ziehkraft der Walzen durch die Ziehwirkung des anschließenden Kühlofens zwar ersetzt werden. Bei Produktionsbeginn oder im Falle eines Abrisses des Glasbandes ist der Prozess nur mit ausserordentlichem Aufwand zu starten, da der neue Glasbandanfang manuell bis weit in den Kühlofen transportiert werden muss, bis wieder eine Ziehwirkung entsteht.

Ein Glasbandabriss ist ein nicht erwünschter, aber doch regelmäßig auftretender Zustand, der verfahrenstechnisch beherrscht werden muss.

Es ist Aufgabe der Erfindung, eine Vorrichtung der eingangs erwähnten Art zu schaffen, mit der das Glasband ohne Verletzung der Glasbandunterseite transportierbar ist und die insbesondere zu Produktionsbeginn oder nach einem Glasbandabriss eine Vorschubkraft auf das Glasband überträgt.

Diese Aufgabe wird dadurch gelöst, dass der Walze wenigstens eine Unterstützungsvorrichtung zugeordnet ist, dass mittels einer Stellvorrichtung wahlweise die Walze oder die Unterstützungsvorrichtung in Kontakt mit der Glasbandunterseite bringbar ist, wobei die Unterstützungsvorrichtung zumindest bereichsweise über ein Gaspolster im Kontakt mit der Glasbandunterseite steht.

Die erfindungsgemäße Vorrichtung lässt sich stets dann einsetzen, wenn in Verfahrensabläufen ein Glasband transportiert werden muss, wie dies beispielsweise beim Walzen von Flachglas oder beim Floatverfahren erforderlich ist.

Während des normalen Produktionsablaufes kann das Glasband berührungslos oder im Wesentlichen berührungslos mittels der Unterstützvorrichtungen geführt werden. Dabei wird eine Verletzung der Unterseite des Glasbandes verhindert. Um bei der Produktionsaufnahme oder dem Produktionsbeginn eine Vorschubkraft auf das Glasband übertragen zu können, lassen sich die Walzen mittels der Stellvorrichtung in Kontakt mit der Glasbandunterseite bringen. Das Glasband wird dann mit Hilfe der Walzen transportiert.

Insbesondere beim Floatverfahren kann im Falle eines Glasbandabrisses das Glasband durch die Einwirkung der Walzen transportiert werden, bis es weit genug in den Kühlofen eingefahren ist. Dann kann der Kühlofen wieder die Ziehfunktion übernehmen. Der vorgelagerte Transport kann schließlich auf die Unterstützungsvorrichtung übergeben werden. Als vorteilhaft erweist sich auch, dass die Walzen kostengünstiger als bisher ausgeführt werden können, da sie nur zum Produktionsbeginn und beim Glasbandabriss benötigt werden und in dieser Zeit nicht die Produktionsqualität beeinflussen.

Gemäß einer bevorzugten Ausgestaltungsvariante der Erfindung ist es vorgesehen, dass wenigstens zwei Walzen in Transportrichtung des Glasbandes hinter einer Glasfertigungs- oder Glasbearbeitungseinheit angeordnet sind, und dass in Transportrichtung vor der ersten Walze sowie zwischen den Walzen jeweils wenigstens eine Unterstützungsvorrichtung angeordnet ist. Die erste, in Transportrichtung direkt nach der Glasbearbeitungseinheit angeordnete Unterstützungsvorrichtungen, hebt das Glasband aus. Beispielsweise kann die Glasbearbeitungseinheit eine Floatwanne sein. Dadurch, dass die Aushebvorgang aus der Floatwanne berührungslos stattfindet, wird das Glasband in dieser empfindlichen Phase nicht mechanisch beeinträchtigt. Ein Vorteil dieser Konstruktion ist auch, dass die Unterstützungsvorrichtungen so dimensionierbar sind, dass gegebenenfalls bestehende Anlagen teilweise nachgerüstet werden können.

Eine mögliche Erfindungsvariante zeichnet sich dadurch aus, dass die Unterstützungsvorrichtung in ihrem der Glasband-Unterseite zugewandten Bereich eine gasdurchlässige Schicht aufweisen, und dass die gasdurchlässige Schicht an einen Druckerzeuger angeschlossen ist. Dabei kann es insbesondere vorgesehen sein, dass die gasdurchlässige Schicht Bohrungen und/oder Schlitze für den Gasdurchtritt aufweist oder dass die gasdurchlässige Schicht aus porösem Sintermtall, poröser Keramik oder aus Graphit besteht. Auf der gasdurchlässigen Schicht können gegebenenfalls gasdurchlässige Beschichtungen aus Edelmetall aufgebracht sein, ebenfalls andere Antihaft- oder ähnliche Oberflächenschutzschichten.

Erfindungsgemäß kann es auch vorgesehen sein, dass zur Erzeugung des Gaspolsters feuchte Luft, ein Inertgas, ein reduzierendes Gas oder Gasgemisch oder ein SO₂haltiges Gas der gasdurchlässigen Schicht zugeleitet ist.

Insbesondere beim Einsatz im Floatverfahren kann es bei der unmittelbar der Floatwanne nachgeschalteten Unterstützungsvorrichtung vorteilhaft sein, wenn hier ein Inertgas oder ein reduzierendes Gas verwendet ist, um eine Oxidation des in der Floatwanne gehaltenen Zinns zu vermeiden.

Vorzugsweise sollte die, in Transportrichtung verlaufende, gasdurchströmte Auflagebreite auf der Oberseite der Unterstützungsvorrichtungen das Maß von 20 mm übersteigen, da bei zu kleinen Breiten vergleichsweise hohe Gasdurchflüsse notwendig sind.

Gemäß einer bevorzugten Erfindungsvariante kann es vorgesehen sein, dass der Unterstützungsvorrichtung ein Wärmetauscher zugeordnet ist oder diese einen Wärmetauscher aufweisen. Damit kann eine Überhitzung der Unterstützungsvorrichtungen verhindert werden, ebenfalls kann der zugeführte Gasstrom temperiert werden.

Eine mögliche Erfindungsalternative ist dergestalt, dass die Stellvorrichtung die Walzen gegenüber den Unterstützungsvorrichtungen oder die Unterstützungsvorrichtung gegenüber den Walzen verstellt, wobei die Verstellrichtung einen Versatz entgegen der Schwerkraftrichtung schafft.

Wenn die Walzen nur zu Beginn oder bei Störfällen benötigt werden, kann es auch vorgesehen sein, dass die Walzen zumindest bereichsweise eine rauhe Oberfläche aufweisen.

Damit wird im Rollenbetrieb eine gute Kraftübertragung auf das Glasband sichergestellt. Es kann als Rauhigkeit auch eine Strukturierung auf der Oberfläche der Walzen verwendet sein.

Um eine Schwebewirkung bereits bei vergleichsweise niedrigen Gasdurchflüssen zu erzielen, werden gemäß der vorliegenden Erfindung die oberen Flächen der Unterstützungsvorrichtungen, an denen sich ein Gasfilm bildet, eben oder vorzugsweise leicht entsprechend dem aufliegenden Glasband gekrümmt ausgebildet.

Zweckmäßigerweise weisen die Unterstützungsvorrichtungen einen dreieckigen oder zwickelförmigen Querschnitt auf, um den zwischen den Rollen zur Verfügung stehenden Platz möglichst effektiv zu nutzen und bei möglichst geringem Abstand zwischen den Rollen eine möglichst große Breite der Auflageflächen in Ziehrichtung zu erreichen.

Die Erfindung wird im Folgenden anhand eines in der Zeichnung dargestellten Ausführungsbeispieles näher erläutert.

Es zeigen:
- Fig. 1: in Seitenansicht und schematischer Darstellung eine Vorrichtung zur Unterstützung eines Glasbandes und
- Fig. 2: die Darstellung gemäß Fig. 1 in einer veränderten Betriebsstellung.

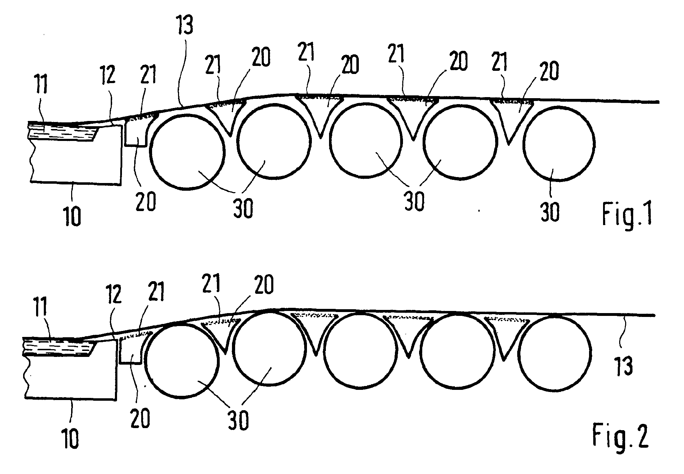

In der Fig. 1 ist ein Teil einer Glasbearbeitungseinheit, nämlich eine Floatwanne, einer Flachglas-Fertigungsanlage gezeigt. Die Floatwanne 10 nimmt ein Zinnbad 11 auf. Im Bereich des längsseitigen Endes der Floatwanne 10 ist eine Austrittskante 12 angeordnet. Zur Floatglasfertigung wird flüssiges Glas auf das Zinnbad 11 aufgegeben. Dieses wird dem Bereich der Austrittskante 12 zugefördert und dabei kontinuierlich abgekühlt, so dass sich ein erstarrtes Glasband 13 ergibt. Dieses muss über die Austrittskante 12 aus der Floatwanne 10 ausgehoben werden. Hierzu werden üblicher Weise im Stand der Technik Walzen 30 eingesetzt, die auch als Lift-Out-Roller bezeichnet werden. Auf diese läuft das Glasband 13 derart auf, dass ein Kontakt der Glasbandunterseite mit der Austrittskante verhindert ist. Wie die Fig. 2 zeigt, wird das Glasband 13 über die Walzen 30 abtransportiert und in den Bereich eines angeschlossenen, in den Zeichnungen nicht dargestellten, Kühlofen gefördert. Erfindungsgemäß sind nun zusätzlich zu den Walzen 30 Unterstützungsvorrichtungen 20 verwendet. Eine erste Unterstützungsvorrichtung 20 ist unmittelbar im Anschluss an die Austrittskante 12 angeordnet. Weiterhin sind auch Unterstützungsvorrichtungen 20 zwischen jeweils benachbarten Walzen 30 angeordnet. Wie die Zeichnungen zeigen, sind diese dreiecks- oder zwickelförmig ausgebildet. Infolge dieser geometrischen Ausgestaltung können die Unterstützungsvorrichtungen 20 platzsparend angeordnet und die Walzen 30 dicht aneinander gereiht werden.

An ihrem der Glasbandunterseite zugewandten Bereich weisen die Unterstützungsvorrichtungen 20 eine gasdurchlässige Schicht 20 auf. Diese bildet eine Anströmseite und eine dem Glasband 13 zugewandten Druckaufbauseite. Die Druckaufbauseite kann entweder eben oder entsprechend der Glasband-Biegung leicht gekrümmt ausgeführt sein. Die Druckaufbauseite ist innerhalb der Unterstützungsvorrichtungen 20 angeordnet und über eine Verteilerkammer an einen Druckerzeuger angeschlossen.

Über den Druckerzeuger kann ein Gas in den Bereich der Druckaufbauseite gefördert werden. Dieses bildet dann zwischen der gasdurchlässigen Schicht und der Unterseite des Glasbandes 13 ein Gaspolster. Wie die Fig. 1 erkennen lässt, trägt das Gaspolster das Glasband 13.

In den Fig. 1 und 2 sind unterschiedliche Betriebszustände gezeigt. Fig. 1 zeigt die Anordnung im normalen Produktionszustand. Fig. 2 hingegen zeigt eine Einstellung, die zum Produktionsstart oder nach einem Glasbandriss gefahren wird. Zwischen den beiden Betriebszuständen kann mittels einer Stellvorrichtung umgeschalten werden. Die Stellvorrichtung führt dabei eine Relativ-Verschiebung zwischen den Walzen 30 und ein Unterstützungsvorrichtungen 20 durch. Dabei können dann wahlweise die Unterstützungsvorrichtungen 20 (Fig. 1) oder die Walzen 30 (Fig. 2) in Kontakt mit der Glasbandunterseite gebracht werden.

## Patentansprüche

1. Vorrichtung zur Unterstützung eines Glasbandes mit wenigstens einer, im Bereich der Unterseite des Glasbandes angeordneten Walze,
**dadurch gekennzeichnet,**
**dass** der Walze (30) wenigstens eine Unterstützungsvorrichtung (20) zugeordnet ist,
**dass** mittels einer Stellvorrichtung wahlweise die Walze (30) oder die Unterstützungsvorrichtung (20) in Kontakt mit der Glasbandunterseite bringbar ist, wobei die Unterstützungsvorrichtung (20) zumindest bereichsweise über ein Gaspolster im Kontakt mit der Glasbandunterseite steht.

2. Vorrichtung nach Anspruch 1,
**dadurch gekennzeichnet,**
**dass** wenigstens zwei Walzen (30) in Transportrichtung des Glasbandes (13) hinter einer Glasfertigungs- oder Glasbearbeitungseinheit angeordnet sind, und
**dass** in Transportrichtung vor der ersten Walze sowie zwischen den Walzen (30) jeweils wenigstens eine Unterstützungsvorrichtung (20) angeordnet ist.

3. Vorrichtung nach Anspruch 1 oder 2,
**dadurch gekennzeichnet,**
**dass** die Unterstützungsvorrichtung (20) in ihrem der Glasband-Unterseite zugewandten Bereich eine gasdurchlässige Schicht (21) aufweist, und
**dass** die gasdurchlässige Schicht (21) an einen Druckerzeuger angeschlossen ist.

4. Vorrichtung nach Anspruch 3,
**dadurch gekennzeichnet,**
**dass** die gasdurchlässige Schicht (21) Bohrungen und/oder Schlitze für den Gasdurchtritt aufweist.

5. Vorrichtung nach Anspruch 4,
**dadurch gekennzeichnet,**
**dass** die gasdurchlässige Schicht (21) aus porösem Sintermtall, poröser Keramik oder aus porösem Graphit besteht.

6. Vorrichtung nach einem der Ansprüche 3 bis 5,
**dadurch gekennzeichnet,**
**dass** zur Erzeugung des Gaspolsters feuchte Luft, ein Inertgas, ein reduzierendes Gas oder Gasgemisch oder ein SO₂-haltiges Gas der gasdurchlässigen Schicht (21) zugeleitet ist.

7. Vorrichtung nach einem der Ansprüche 1 bis 6,
**dadurch gekennzeichnet,**
**dass** der Unterstützungsvorrichtung (20) ein Wärmetauscher zugeordnet ist oder diese einen Wärmetauscher aufweisen.

8. Vorrichtung nach einem der Ansprüche 1 bis 7,
**dadurch gekennzeichnet,**
**dass** die Stellvorrichtung die Walzen (30) gegenüber den Unterstützungsvorrichtungen (20) oder die Unterstützungsvorrichtung (20) gegenüber den Walzen (30) verstellt, wobei die Verstellrichtung einen Versatz entgegen der Schwerkraftrichtung schafft.

9. Vorrichtung nach einem der Ansprüche 1 bis 8,
**dadurch gekennzeichnet,**
**dass** die Walzen (30) zumindest bereichsweise eine rauhe Oberfläche aufweisen.

10. Vorrichtung nach einem der Ansprüche 1 bis 9,
**dadurch gekennzeichnet,**
**dass** die zwischen zwei benachbarten Walzen (30) angeordnete Unterstützvorrichtung (20) im Querschnitt dreieck- oder zwickelförmig ausgebildet ist.

11. Vorrichtung nach einem der Ansprüche 1 bis 10,
**dadurch gekennzeichnet,**
**dass** die gasdurchlässige Schicht (21) an ihrer, dem Glasband (13) zugekehrten Außenseite eine gekrümmte Oberflächengeometrie aufweist.

12. Vorrichtung nach einem der Ansprüche 1 bis 11,
**dadurch gekennzeichnet,**
**dass** die in Transportrichtung des Glasbandes (13) verlaufende, gasdurchströmte Auflagebreite auf der Oberseite der Auflagesegmente größer als 20 mm ist.
